**Europäisches Patentamt**

**European Patent Office**

**Office européen des brevets**

(11) Veröffentlichungsnummer: **0 062 859**

**A1**

(12) ## EUROPÄISCHE PATENTANMELDUNG

(21) Anmeldenummer: **82102832.1**

(22) Anmeldetag: **02.04.82**

(51) Int. Cl.³: **F 16 H 7/02**
**F 16 H 1/34, F 16 H 9/26**

(30) Priorität: **08.04.81 DE 3114154**
**16.01.82 DE 3201351**

(43) Veröffentlichungstag der Anmeldung:
**20.10.82 Patentblatt 82/42**

(84) Benannte Vertragsstaaten:
**FR**

(71) Anmelder: **Steuer, Willi**
**Beim Tilgesbrunnen 11**
**D-6604 Saarbrücken-Güdingen(DE)**

(72) Erfinder: **Steuer, Willi**
**Beim Tilgesbrunnen 11**
**D-6604 Saarbrücken-Güdingen(DE)**

(54) **Planetengetriebe mit elastisch verformbaren Planeten; Wälzkettengetriebe.**

(57) Planetengetriebe mit wahlweise stationärem Planetenträger (E) oder Hohlrad (C), bei welchem das Drehmoment von einem oder mehreren, auf den Umfang verteilten elastisch verformten Planeten (F,G,H) übertragen wird. Dabei passen diese sich dem ringzylinderförmigen Hohlraum zwischen Sonnen- und Hohlrad an und übertragen, in Verbindung mit Rollen (D1, D2, D3, V, W) am Planetenträger, drückend oder ziehend, in eine Vielzahl von Zähnen am Sonnen- und Hohlrad unmittelbar eingreifend oder mit einer großen Reibfläche an diesen angreifend, Kraft und Bewegung.

Als Planeten werden Wälzketten (F,G,H) verwendet oder je nach Getriebevariante Zahnriemen oder Keilriemen. Die Planeten können wegen ihrer Verformbarkeit von außen durch eine mit einem Deckel verschließbare Öffnung im Hohlrad in den Umlaufraum leicht eingeführt bzw. gewechselt werden.

./...

Croydon Printing Company Ltd.

# Blatt 1
_Getriebestufe m. drückenden_
_od. ziehenden Walzketten_

Schnitt C÷H

Schnitt A÷B

oberer Gehäuseteil
demontabel

Schnitt E÷F

S

⑥

Planetenträger É

Kugellager

Kugellager

Schnitt S÷T

Schnitt G÷H

Schnitt O÷P

Exzenter

Zahn

Zahn

B'

C'

É

É

T

B'

$D_1$  $D_2$  $D_3$

A  B  C  D  E  F  G  H  P

Anmelder:

Willi Steuer                    Saarbrücken-Güdingen,den 19.3.1982

Beim Tilgesbrunnen 11           Aktenzeichen:P31 14 154.4-12 (DPA)

66o4 Saarbrücken-Güdingen              :P32 o1 351.5(Zusatz)

## B E S.C H R E I B U N G

### Planetengetriebe mit elastisch verformten Planeten; Wälzkettengetriebe

Die Erfindung bezieht sich auf ein Planetengetriebe mit wahlweise stationärem Planetenträger oder Hohlrad, bei welchem das Drehmoment über endlose Zugmittel, wie Zahnriemen, Keilriemen oder Ketten vom Sonnenrad auf das Hohlrad bzw. den Planetenträger übertragen wird bzw. auf Getriebe mit elastischen Zahnrädern.

Es sind folgende Getriebe bekannt, die die Erfindung tangieren:

a) Planetengetriebe. gemäß der Offenlegungsschrift des Deutschen Patentamtes Nr. 1750431, bei welchem das Drehmoment vom Sonnenrad mittels endloser Zugmittel auf Planetenräder und von dort auf das Hohlrad übertragen wird.

b) Ein Planetengetriebe nach der Offenlegungsschrift des Deutschen Patentamtes Nr. 2513004, als Umlaufgetriebe, mit Planetenrädern und zwei Sonnenrädern in koaxialer Anordnung, bei welchem die Antriebswelle den Planetenträger dreht, der mindestens zwei Paare koaxial angeordneter Planetenräder trägt, die mittels endloser Zugmittel einerseits mit dem einen im Gehäuse arretierten Sonnenrad und andererseits mit

...

dem anderen, mit der Antriebswelle verbundenen Sonnenrad verbunden sind.

c) Weiterhin ist bekannt, das als Harmonie Drive bezeichnete, amerikanische Getriebe, dessen Obertragungsteile aus einem steifen, feststehenden Hohlrad und einem sehr elastischen, mit dem Abtrieb verbundenen, inneren Zahnrad bestehen. Dabei dreht sich das innere Zahnrad auf einem ovalen Wälzlager, dessen Innenteil dem Steg entspricht und den Antrieb darstellt.

d) Desweiteren ist bekannt, das Getriebe nach United States Patent, 4,237,751, das ähnlich dem Harmonie Drive mit einem starren Hohlrad und einem in dieses eingreifende, koaxial angeordneten, sehr elastischen, Obergröße besitzenden Zahnrad ausgerüstet ist, wobei zwei Rollen am drehenden Steg das elastische Zahnrad laufend derart deformieren, daß die Obergröße zwischen ihnen nach innen abgebogen wird, und in Verbindung mit der unterschiedlichen Zähnezahl Drehmoment und Untersetzung zustande kommen.

e) Weiterhin ist bekannt, der Antrieb nach dem United States Patent 3,765,268, der mit einem deformierbaren geschlossenen Zahnriemen arbeitet.

Zu a)

Zur Obertragung des Drehmomentes werden zwei Planetensätze benötigt und zusätzlich ein Treibriemen als Obertragungselement zwischen diesen. Das bedeutet größere Massenkräfte, schlechteren Wirkungsgrad und größeren Hohlraddurchmesser, auch gegenüber dem herkömmlichen Umlauf-Rädergetriebe. Die Kraftübertragung wird durch den Treibriemen nicht erhöht, da der normale Zahneingriff an Sonnen- und Hohlrad beibehalten wird (1 bis 2 Zähne).

Zu b)

Um eine Untersetzung zu erzielen, sind mindestens zwei Sonnenräder und vier Planeten notwendig. Durch das Fehlen des Hohlrades können zwei Ober-

...

setzungsverhältnisse pro Stufe nicht ermöglicht werden. Die mittelbare Übertragung durch Riemen vergrößert den Achsabstand und damit die Baugröße.

Das Getriebe ist einstufig nur für große Unter- oder Übersetzungen geeignet. Ferner sind für die gleiche Getriebestufe unterschiedliche Riemenlängen oder eine Riemenspannvorrichtung notwendig.

Zu c)

Das als Harmonie Drive bezeichnete Getriebe ist im Gegensatz zu der Erfindung nur für große Untersetzungen geeignet. Ferner benötigt es eine große Baulänge, um die Funktion des elastischen Zahnrades zu gewährleisten und ein ovales, nicht serienmäßig beziehbares und daher teueres Kugellager, das nur für Langsamlauf gedacht ist. Der ovale Steg ist schwierig herzustellen.

Zu d)

Auch dieses Getriebe ist nur für große Untersetzungen geeignet und bedarf einer großen Baulänge zwecks Erreichen der notwendigen Elastizität bzw. Verformbarkeit des antreibenden Zahnrades.

Der dünnwandige Hohlzylinder ist einer ständigen Verformung unterworfen. Auch dieses Getriebe ist nur für den Langsamlauf gedacht und ermöglicht pro Stufe nur ein einziges Übersetzungsverhältnis.

Zu e)

Dieses System ist als Umlaufrädergetriebe im Sinne der Erfindung nicht gedacht.

Die Erfindung löst die Aufgabe, die Vorteile des herkömmlichen Umlaufrädergetriebes mit den Vorteilen der mittels elastischen Zugmitteln arbeitenden Getriebe zu vereinen.

Die wesentlichen Vorteile sind:

- Nutzung einer Vielzahl von Zähnen zur Kraftübertragung bzw. einer großen Reibfläche, womit kleine spezifische Zahn- bzw. Flächenbelastung bei geringer Baugröße verbunden ist.

- Durch die hohe Elastizität und gute Lastverteilung am Wirkumfang ist das Getriebe gegen Stöße, Schläge und Verwindung unempfindlich und es bedarf keiner großen Baugenauigkeit. Eine elastische Kupplung erübrigt sich.
- Die Zugmittel sind billiger als Zahnräder, was auch für die Wälzketten gilt, die aus vorgefertigten Massenartikeln zusammengesetzt werden.
- Die Massenkräfte sind aufgrund des geringen Planetengewichtes und kleinen Bauvolumens klein und der Wirkungsgrad groß.
- Eine Nachschmierung entfällt, wenn Zahnriemen, Keilriemen oder Wälzketten mit Wälzgelenken verwendet werden. Die Kugellager sind mit Dauerschmierung ausgerüstet.
- Die Öffnung im Mantel des Hohlrades erlaubt in Verbindung mit der Verformbarkeit der Planeten ein leichtes Wechseln derselben.
- Die Möglichkeit, die Anzahl der Planeten am Wirkumfang, je nach zu übertragendem Drehmoment, leicht variieren zu können, erlaubt eine Standardisierung in bestimmten Leistungsgrenzen.
- Bei Verwendung von Wälzketten können diese Zug- und Druckkräfte übertragen.

Die Erfindung eignet sich besonders für:
1. Getriebe des allgemeinen Maschinenbaues
2. Automatische Automobilgetriebe
3. Radgetriebe, wegen      guten Verhaltens bei Schlägen, Stößen und Verwindungen.


Darstellung der Erfindung

Planetengetriebe mit wahlweise stationärem Planetenträger oder Hohlrad, bei welchem das Drehmoment von einem oder mehreren, auf den Wirkumfang verteilten elastisch verformten Planeten übertragen wird. Dabei passen diese sich dem ringzylinderförmigen Hohlraum zwischen Sonnen- und Hohlrad an und übertragen in ovalem bis wurstförmigem Zustand, in Verbindung mit Rollen am Planetenträger, drückend oder ziehend, in eine Vielzahl von Zähnen am Sonnen- und Hohlrad unmittelbar eingreifend oder mit einer großen Reibfläche an diesen angreifend, Kraft und Bewegung.
Als elastisch verformbare Planeten sind mehrere Systeme möglich, z.B. geschlossene radial stabilisierte Keilriemen oder Zahnriemen oder radial

...

stabilisierte Wälzketten. In der Folge sind Wälzketten beschrieben.

Wegen der Verformbarkeit der Planeten können diese von außen durch eine mit einem Deckel verschließbare Öffnung im Hohlrad in den Umlaufraum eingeführt bzw. gewechselt werden.

Auf Zeichnung Blatt 1 ist eine einfache Planetengetriebestufe dargestellt, bei der die drei elastisch verformten Wälzketten "F", "G" und "H", drückend Kraft und Bewegung des Sonnenrades "B" an das Umfangsrad "C" bzw. über die Rollen $D_{1,2,3}$ an den Planetenträger "E" abgeben. Dabei dienen die Rollen $D_{1,2,3}$ als Druck- und Umlenkrollen gleichzeitig. Die Abstände der Wälzketten und der Druck- bzw. Umlenkrollen zueinander sind in der Umlaufbahn so gewählt, daß z. B. bei der dargestellten Drehrichtung die Rolle "$D_1''$" dem Planeten "F" als Druckrolle und dem Planeten "G" als Umlenkrolle dient. Druck- und Umlenkrollen sind mit dem Planetenträger fest oder verstellbar verbunden. Durch Verstellen der Rollen können die Laufeigenschaften der Wälzketten korrigiert werden.

Die elastisch verformte Wälzkette ist im allgemeinen so ausgebildet, daß diese, wie in Darstellung Blatt 1 gezeigt, und in Blatt 2, mittleres Bild verdeutlicht, in der Umlenkung den engstmöglichen Radius erreicht und damit dort die größte Steifigkeit aufweist. Durch Aneinanderstoßen der Kettengliederfüße wird die Wälzkette in der Umlenkung zum steifen Gebilde. An ihrem äußeren Umfang ist die Wälzkette mit Lauf- und Stützriemen versehen, mit welchen sie sich an entsprechenden Laufspuren am Sonnen- und Hohlrad abstützt, zentriert und den Zahneingriff entlastet.

Aus Blatt 1 ist eine zweite Getriebevariante ersichtlich, bei der unter Wegfall der Druck- und Umlenkrollen $D_{1,2,3}$ die strichpunktiert gezeichneten Zug- und Umlenkrollen "V" Kraft und Bewegung an den Planetenträger abgeben. Sie sind fest oder verstellbar mit dem Planetenträger verbunden und lenken kugelgelagert die Wälzketten um. Dabei wird der Planetenträger von den Wälzketten gezogen. Bei Getrieben mit Richtungswechsel kann zusätzlich eine zweite Rolle "W" in der entgegengesetzten Umlenkung der Wälzkette angeordnet werden. Ist der Planetenträger so ausgebildet, daß er bei Stillstand, ohne ein Hindernis zu bilden, ein Wandern der Planeten in der Umlaufbahn zuläßt, z. B. durch Verbindung der beiden beiderseits

...

der Wälzkette angeordneten Planetenträgerscheiben "E" mit Hilfe der Achsen der Zug- und Umlenkrollen, so genügt nur eine Rolle "V". In diesem Falle wandern bei Richtungswechsel die Wälzketten F, G, H in Richtung Rolle "V" und nehmen, diese umschließend, den Planetenträger in umgekehrter Richtung mit. Bei Verwendung von nur einer Rolle für beide Drehrichtungen wird dieselbe am Umfang glatt ausgebildet und die Füße der Kettenglieder enden auf dem gleichen Kreisbogen, um das Wandern im Innern der Wälzkette zu verbessern. Bei Verwendung von zwei Rollen können diese am Umfang mit den Kettengliedern verzahnt sein, um diese zu stabilisieren.

Auf Blatt 3 ist eine Alternative dargestellt, bei der die Wälzkette sowohl Druck- wie auch Zugkräfte übertragen kann. Diese Getriebeart eignet sich für die Übertragung größerer Leistungen. Die Druckübertragung wird hierbei durch jeweils zwei zwischen zwei Wälzketten angebrachten Druckrollen "I" und "K" übernommen und die Wälzkette kann in der Umlenkung auf der Seite in Drehrichtung des Planetenträgers mit einem lose mitlaufenden, mit den Füßen der Kettenglieder verzahnten Distanzhalters "L" versteift werden. Die Umlenkung der Wälzkette auf der entgegengesetzten Seite erfolgt mittels einer mit dem Planetenträger verbundenen Rolle "M", mittels dieser Zugkräfte über die Spann- und Verbindungslaschen der Wälzketten übertragen werden. Die Wälzketten haben in diesem Falle auf der Seite der Rollen "M" in den Punkten X und Y nur leichte oder keine Berührung mit den Druckrollen "I" und "K", um ein Quetschen der Kette zwischen beiden Rollensystemen zu vermeiden.

Um eine Balance zwischen Druck- und Zugkräften in der Wälzkette zu erreichen, wirken elastisch verformbare Ausgleichselemente in den Zugrollen oder in den Wälzketten und/oder in den Umlenkrollen in Umlaufrichtung des Planetenträgers gesehen in Verbindung mit einer Verstellbarkeit des Abstandes zwischen Druck- und Zugrolle. Die Balance kann auch in Verbindung mit einem Über- oder Untermaß der Wälzkette im jeweiligen Wälzkettensektor erreicht werden.

Blatt 4 zeigt eine Alternative mit doppelter Zähnezahl, bei der die Wälzkette derart gestaltet ist, daß sowohl die Köpfe der vorgespannten hohlen Stahlglieder "O" wie auch die der starren Glieder "P" mit Taschen für den

...

Eingriff eines Zahnes versehen sind. Dabei fehlen die Stütz- und Laufriemen, so daß die Zahnbreite der Kettengliedbreite entspricht. Die Abstützung der elastisch verformten Wälzkette erfolgt durch die gummierten Flächen "Q" zwischen den Zähnen, die jeweils eine Kopfhälfte der Glieder "O" und "P" zusammen abstützt und so eine Stabilisierung der Wälzkette in radialer Richtung bewirkt.

Der Vorteil dieser Alternativen liegt in der größeren Zahnbreite bei doppelter Zähnezahl und eignet sich daher für größere Belastungen. Der die Druckrollen "I" und "K" umspannende Riemen "R" dient der besseren Lastverteilung und einer Stabilisierung der Wälzkette in radialer Richtung im Bereich der Druckzone.

Als Wälzketten, die ebenfalls Gegenstand der Erfindung sind, werden in ihren Grundarten beschrieben:

I. <u>Wälzketten mit herkömmlichen Drehgelenken</u> auf Blatt 7 dargestellt, zur Aufnahme von Zug- und Druckkräften.

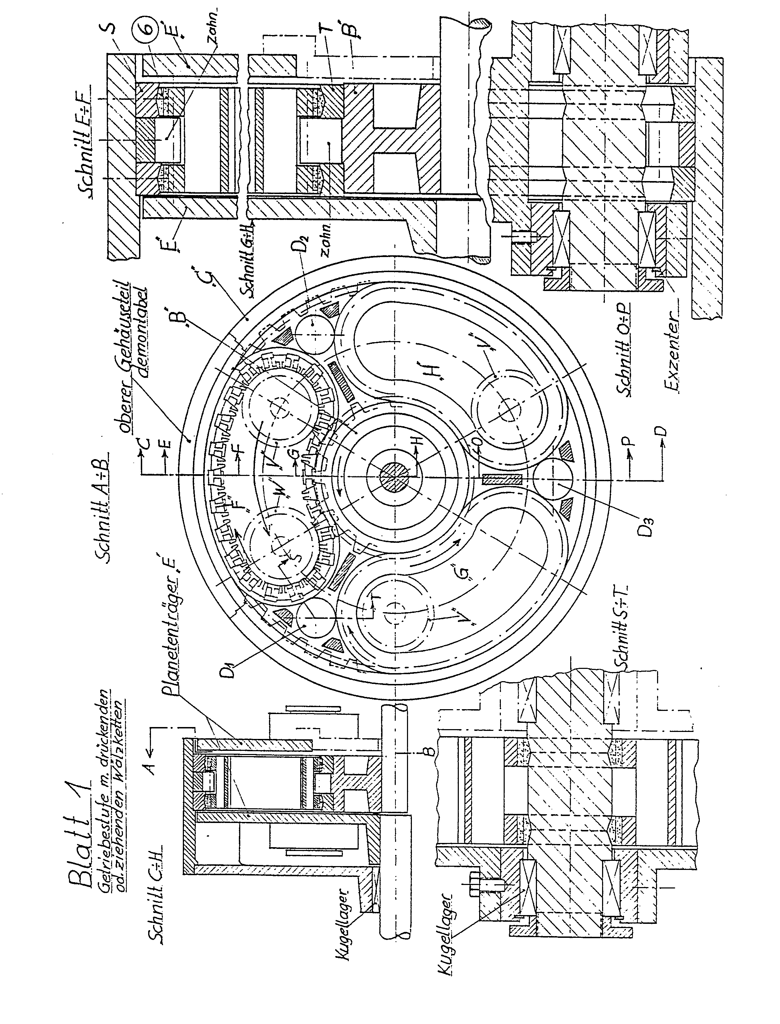

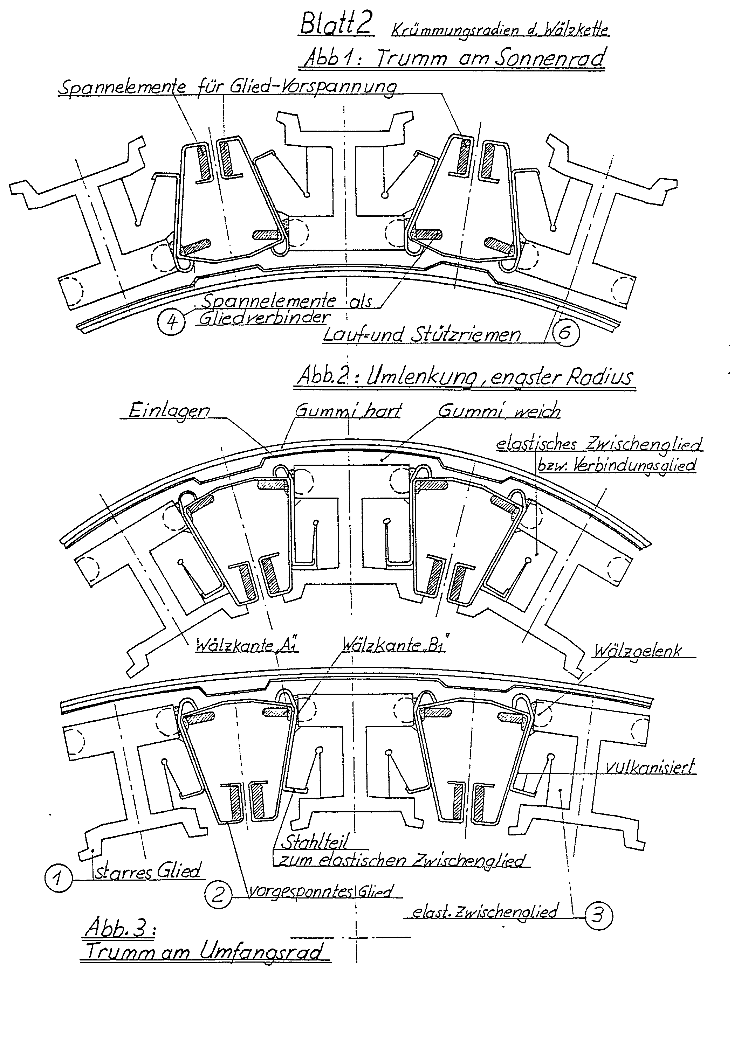

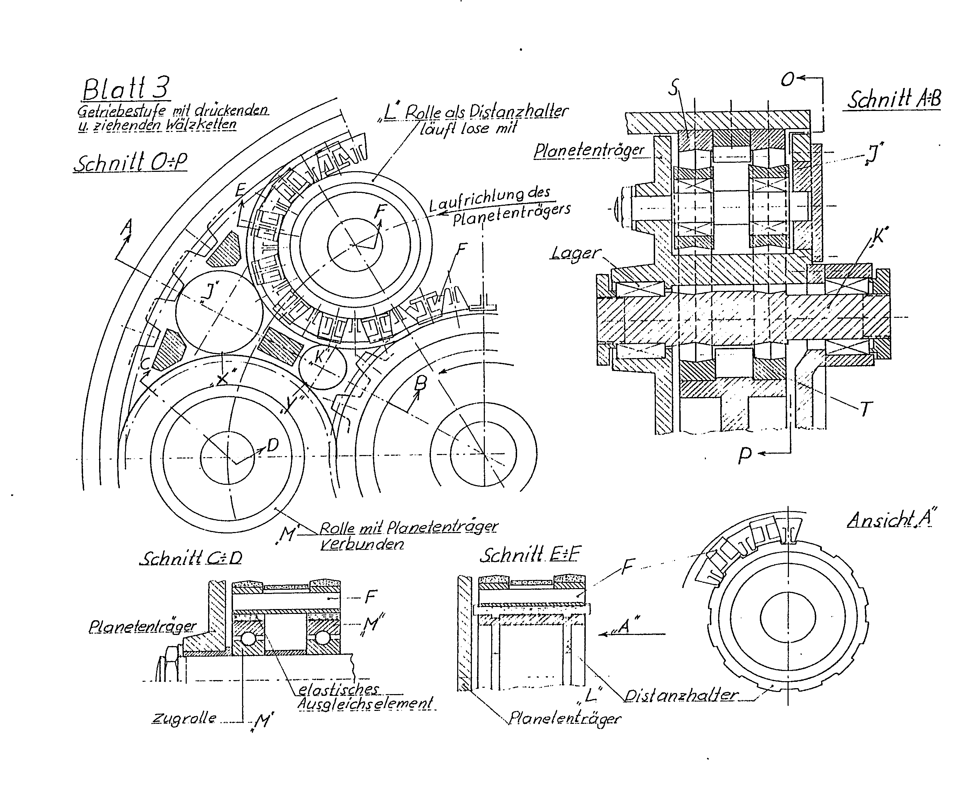

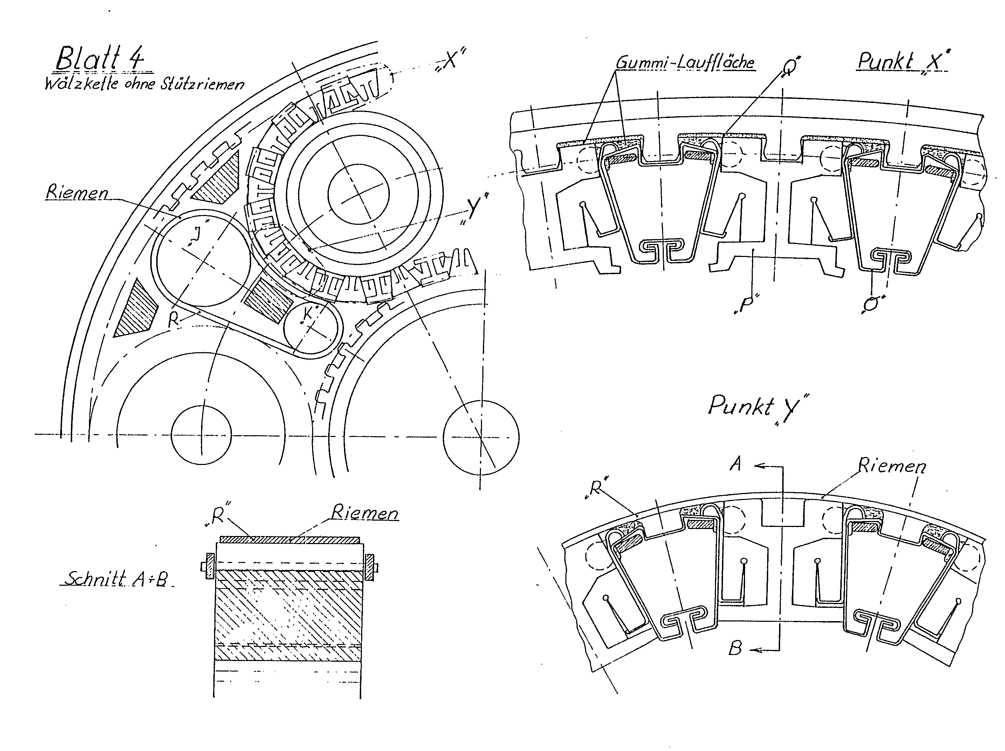

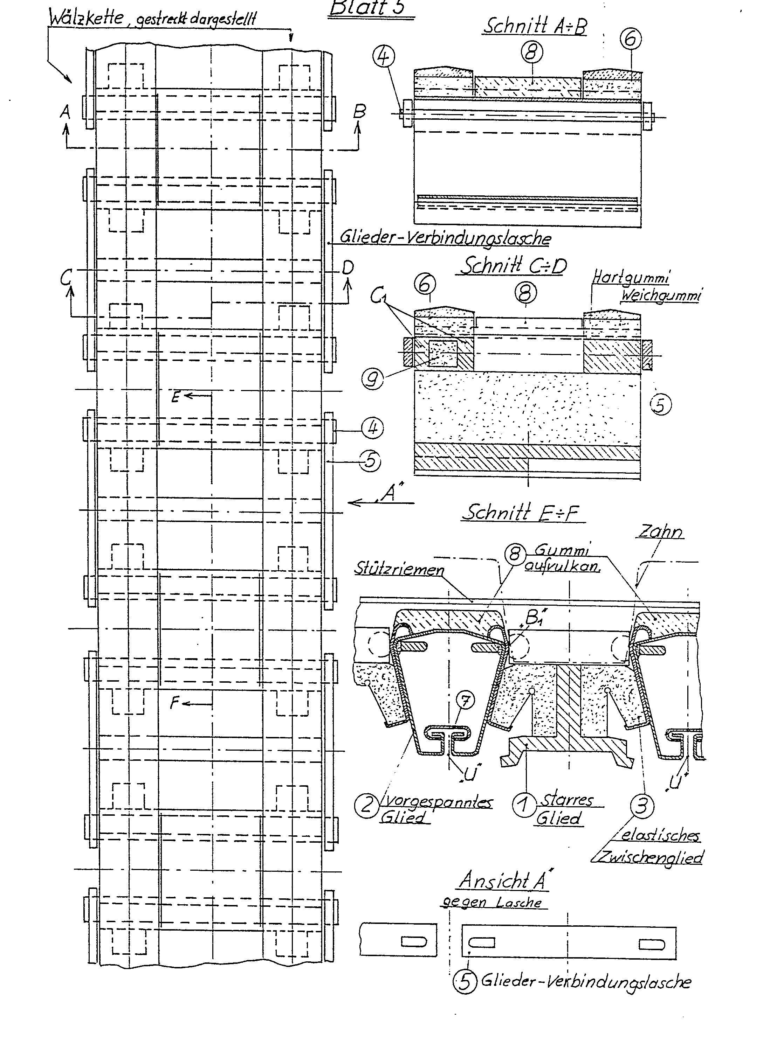

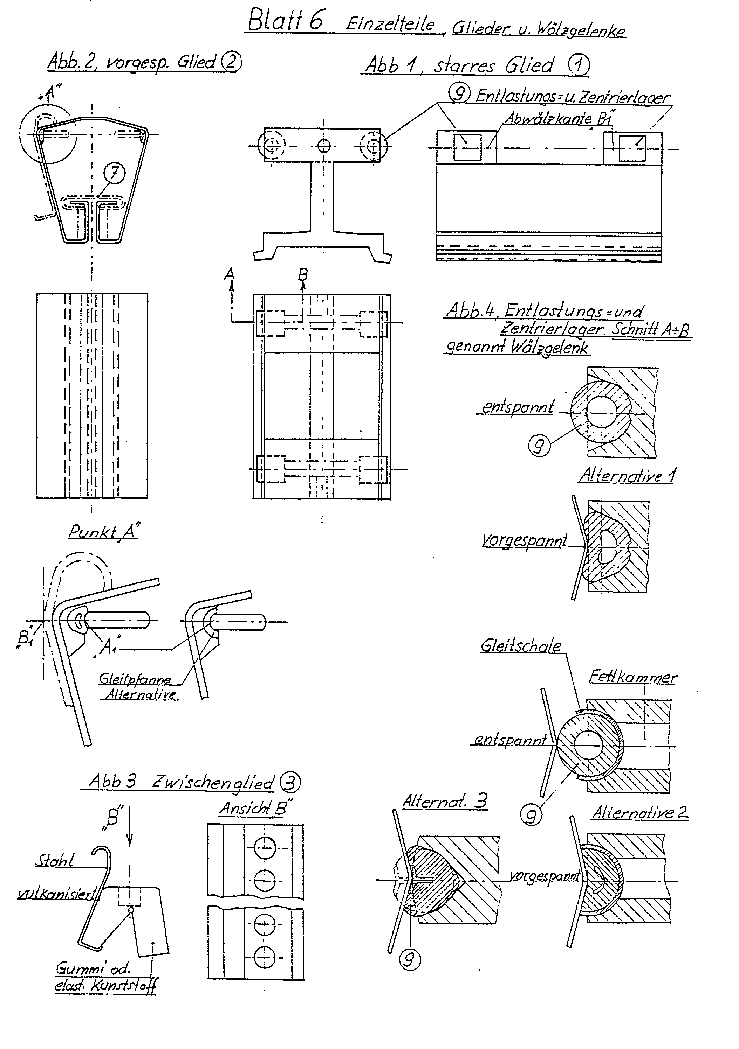

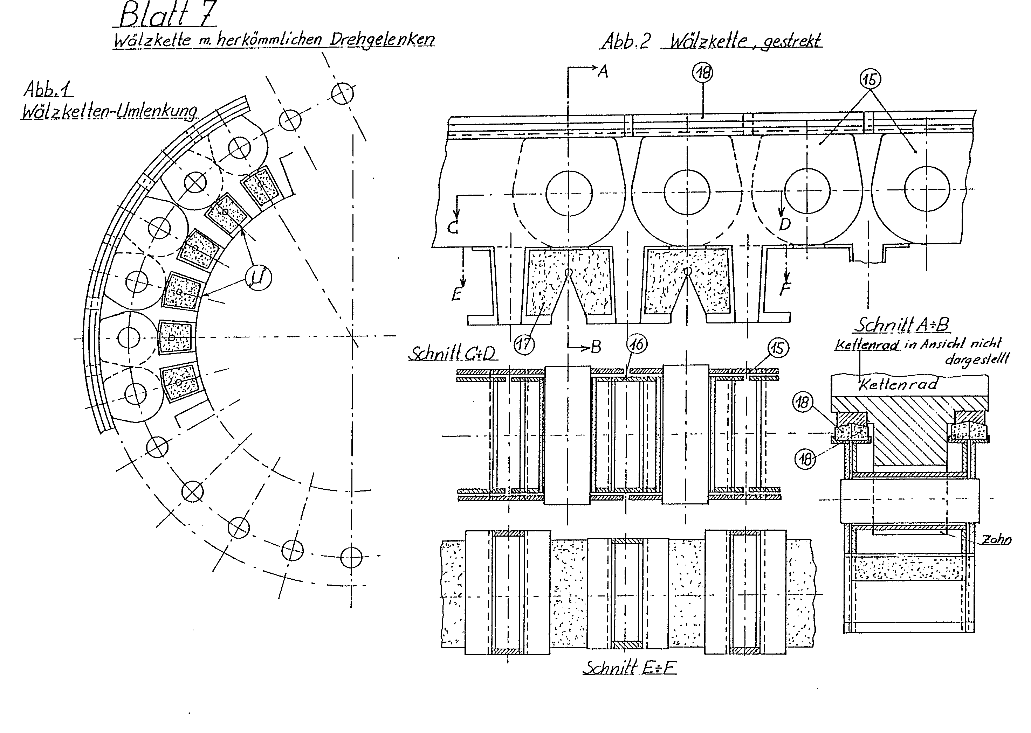

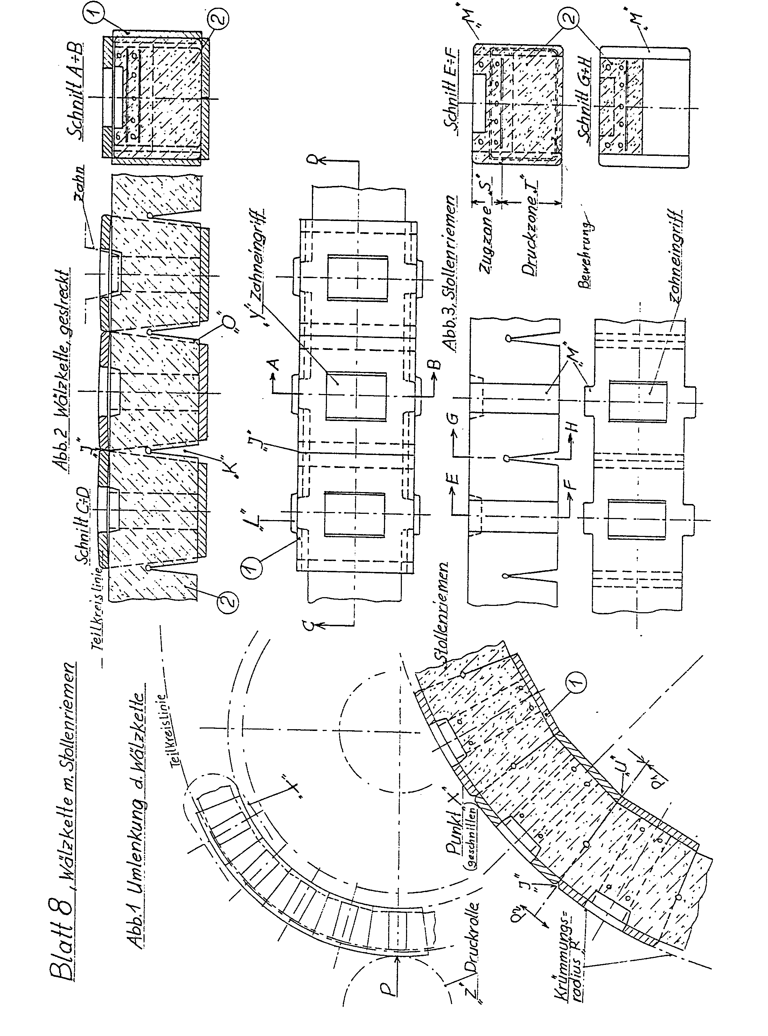

Bei diesen wird zwischen je zwei Laschenpaaren 15 und 16 ein profiliertes elastisch verformbares Zwischenglied 17 angeordnet. Dasselbe wird vorgespannt eingebaut, so daß es in jeder Biegung der Wälzkette Spannung erzeugt. Die Füße der Laschen verjüngen sich zu diesem Zweck in radialer Richtung zum Wälzketteninnern hin und sind beiderseits mit Taschen für die Aufnahme der elastischen Zwischenglieder versehen. In der Darstellung ist für die elastischen Zwischenglieder ein V-förmig profilierter Körper gewählt, dessen gespreizte Schenkel in den Taschen der Laschenfüße gehalten sind. In der Umlenkung der Wälzkette (Abb. 1) ist das elastisch verformbare Zwischenglied vollständig zusammengedrückt und die Laschenfüße berühren sich an der Stelle "U", so daß die Wälzkette, in der Umlenkung zum steifen Gebilde geworden, drückend über die Druckrollen Kraft an den Planetenträger übertragen kann. Die anderen Möglichkeiten der Kraftübertragungen wie ziehend und drückend können aus den vorangegangenen Darstellungen entliehen werden.

Die Innen- und Außenlaschen sind am äußeren Umfang der Wälzkette flanschartig verbreitert zwecks Aufnahme von Stütz- und Laufstollen, Pos. 18.

...

Die Stützrollen der Innen- und Außenlaschen sind nicht miteinander verbunden, stehen auf Lucke und bilden ein gemeinsames Profil, mit welchem sie in der Gegenspur der Zahnräder rechts und links der Zähne laufend, die Wälzkette zentrieren und abstützen und so einen vom Anpreßdruck der Wälzkette unbelasteten Zahneingriff ermöglichen. Die Stützstollen können in Längsrichtung ballig gestaltet werden, so daß sie in der Umlenkung den Umlenkradius bilden.

II. Die Wälzkette mit neuartigen Wälzgelenken, in gestreckter Länge auf Blatt 5 und in den einzelnen Biegezonen auf Blatt 2 dargestellt, besteht abwechseln aus einem starren Glied, Pos. 1, einem vorgespannten Hohlglied, Pos. 2, und einem elastisch verformbaren Zwischenglied, Pos. 3. Die Glieder werden zusammengehalten durch die Spannelemente Pos. 4 und die Verbindungs- und Spannlaschen, Pos. 5. Zusätzlich ist die Wälzkette an ihrem äußeren Umfang, mit Ausnahme bei der Getriebevariante auf Blatt 4, noch mit Lauf- und Stützriemen, Pos. 6, ausgestattet, die mit den Kettengliedern verbunden sind und mit Hilfe derer die elastisch verformte Wälzkette während des Betriebes auf den entsprechenden Laufflächen an Sonnen- und Umfangsrad, Teile S und T an den Druck- und Umlenkrollen $D_{1,2,3}$ (Blatt 1) bzw. "I" und "K" (Blatt 3) sich abstützt. Die Kettenglieder sind derart geformt und gegeneinander verlagert, daß sich dieselben in Funktion aneinander abwälzen und an jeder Stelle beim Umlauf radial miteinander verriegelt sind. Es entstehen beim Bewegen der Glieder gegeneinander keine Reibkräfte wie bei bekannten Ketten mit Drehgelenken. Das elastisch verformbare Verbindungsglied ist so vorgespannt eingebaut, daß es in jedem Biegeradius der umlaufenden Kette unter Spannung steht. In den Umlenkungen erfährt das Verbindungsglied seine höchste Deformation. Dort hat die Wälzkette die größte Spannung und wird durch gegenseitige Berührung der Gliederfüße steif.

Das starre Glied, Pos. 1, doppel-T-förmig ausgebildet, ist durch Unterbrechung des Kopfes in der Mitte ausgespart, wie aus Schnitt C-D des Blattes 5 und in der Seitenansicht, Blatt 6, ersichtlich. In diese Aussparung greifen die Zähne des Sonnen- und Umfangrades ein, um ihre Kraft über das Zwischenglied, Teil 3, an das vorgespannte Glied Teil 2 weiterzugeben. Die Restkopfflächen dienen zur Aufnahme

...

der Entlastungs- und Zentrierlager, Pos. 9 (Wälzgelenke genannt).

Das vorgespannte Hohlglied, Teil 2, aus einem vorspannbaren Material bestehend, (in Blatt 5 aus Stahl), wird durch die Klammer, Pos. 7, unter Vorspannung gehalten. Die Vorspannung ist so gewählt, daß sie höher liegt als die im Normalbetrieb herrschenden Druckkräfte in der Wälzkette. Beim Überschreiten der Vorspannung, durch Schläge, Stöße oder kurzfristige Oberbelastung drückt Teil 2 an der Stelle "U" bis zum Anschlag sich elastisch zusammen. Oberbelastungen der Wälzkette treten zuerst an den Umlenkungen im Bereich der Druck- und Umlenkrollen auf. Die nur leichte Wölbung des Kopfes von Teil 2 garantiert ein hohes Widerstandsmoment. Andererseits ist die Kopfwölbung funktionsbedingt insofern, daß diese beim Abwälzen der Glieder aneinander in der engsten Umlenkung Raum gibt für die starr stehenden Spannelemente. Aus den Bildern Blatt 2 gehen die Stellungen der Spannelemente zu der Kopfseite des Teiles 2 in den verschiedenen Krümmungen der Kette hervor. Das vorgespannte Hohlglied wälzt sich also an den Spannelementen ab.

Das elastische Glied, Teil 3, bewirkt den notwendigen Anpreßdruck der Wälzkette gegen Sonnen- und Umfangsrad. Es besteht aus einem steifen Z-förmigen Teil, das sich an das Glied Teil 2 unter leichter Verspannung formschlüssig anpaßt und einem elastisch verformbaren Teil, mit dem steifen Teil fest verbunden.

Der elastische Teil sitzt einerseits festgepreßt zwischen Fuß, Kopf und Steg des starren Gliedes Teil 1, während er andererseits mit seinem nach demKetteninnern hinliegenden Ende in das Z-förmig gewinkelte Stahlteil eingreift und mit diesem fest verbunden ist. Das nach dem Kettenäußeren hinzeigende Ende des Z-förmigen Stahlteils ist so gebogen, daß es einerseits zu der Stirnseite des Kopfes von Teil 1 eine Kante bildet, Abwälzkante benannt ("$B_1$"), und andererseits auf den Kopf des Teiles 2 herabgebogen ist, wodurch in Verbindung mit der Keilform des Gliedes 2 eine radiale Verriegelung aller drei Kettenglieder miteinander erreicht wird, die im engsten Kettenradius zusätzlich noch dadurch gewährleistet ist, daß der Fuß des Teiles 1 unter den Fuß des Teiles 2 greift.

...

Die Wälzkettenglieder sind mit Hilfe von Spannlaschen über Spannelemente miteinander verbunden, wobei jeweils zwei vorgespannte Hohlglieder, Pos. 2, über je ein Zwischenglied, Pos. 3, gegen die Kopfseiten des Teiles 1 gedrückt und so mit diesem verspannt werden. Die Zentrierung und Lagerung der Spannelemente erfolgt im Winkel zwischen Flanke und Kopf des Hohlgliedes, Pos. 2, auf einer elastischen Abflachung, wie in Punkt "A" des Blattes 6 gezeigt. Bei Bewegung der Kette wälzen sich die Hohlglieder an den Spannelementen ab.

Die Abwälzkanten "$B_1$" der Zwischenglieder Teil 3 werden in die elastisch verformbaren Entlastungs- und Zentrierlager, Teil 9, gedrückt. Diese haben die Aufgabe, Teil 2 mit Teil 1 zu zentrieren und sind so ausgebildet, daß sie die Abwälzfläche "$C_1$" (Blatt 5) von dem durch die Spannlaschen erzeugten Druck ganz oder teilweise entlasten, wodurch die Flächenpressung während des Betriebes um den Betrag der Vorspannung verringert wird. Durch diese Konstruktion ist gewährleistet, daß kein Gleiten, sondern ein Abwälzen erfolgt, wodurch eine Schmierung entfallen kann.
Die beim Abwälzen entstehenden geringen Radialbewegungen werden durch den elastischen Teil der Verbindungsglieder, Teil 3, und die Stützriemen, Teil 6, aufgenommen. Da die Zahnangriffslinie mit den Wälzkanten "$A_1$" und "$B_1$" in einer Ebene liegen (siehe Blatt 6, Punkt A), wird auf die Kettenglieder kein Moment in radialer Richtung ausgeübt.

Die Zentrierung der Wälzkante "$B_1$" kann, wie in den 3 Alternativen des Blattes 6 gezeigt, mit Hilfe eines elastisch verformbaren Hohlzylinders, (Alternative 1), oder mit einem elastisch verformbaren mit Zentrierstern versehenen Vollzylinders ausgebildet sein (Alternative 3).

Eine weitere Möglichkeit besteht darin, einen elastisch verformbaren Hohlzylinder in einer offenen, als Zylindersegment ausgeführten Gleitschale gefaßt zu verwenden (Alternative 2), wobei die Enden des Zylindersegments dem zu zentrierenden Glied als Anschlag dienen. Hierdurch kann eine Drehbewegung erzielt werden, ohne Berührung der Kettenglieder 1 und 3. Die Schmierung der Gleitschale erfolgt als Dauerschmierung über eine in Teil 1 eingelassene Fettkammer.

III. <u>Wälzkette mit Stollenriemen</u>, wie in Zeichnung Blatt 8 dargestellt, zur Übertragung von Druck- und Zugkräften.

Trapezförmige, radial nach innen sich verjüngende Hohlglieder, Teil 1, sind auf einem vorgespannten geschlossenen Riemen, Teil 3 - jedes einzelne Glied diesen umschließend - so aufgereiht, daß diese vom Riemen unter Druck gegeneinander gehalten und zentriert werden, wie auf Zeichnung Blatt 8 dargestellt. Die Gliederköpfe wälzen sich in Funktion über die Kante "I" aneinander ab, wobei die Gliederfüße in der engsten Umlenkung, im Punkte "U", sich berühren und dort die Wälzkette versteifen. Die Zähne des Umfangs- und Sonnenrades greifen in die Aussparungen "Y" in den Gliederköpfen Pos. 1 ein, die auch auf der Riemenaußenseite eingelassen sind. Durch Engerhalten der Aussparungen im Riemen kann beim Zahneingriff eine Dämpfung erreicht werden.

Der elastische Riemen sitzt mit beidseits ausgebildeten Stollen "M" in an den Gliedflanken innen ausgebildeten Taschen "L" eingeklemmt, oder die Stollen sind durch Vulkanisation oder sontige feste Verbindung mit den Gliedflanken verbunden. Sie übertragen die Zugspannung in die bewehrte Riemenaußenzone, nehmen die Druckkräfte der Riemeninnenzone auf und gleichen die Spannungsunterschiede beim Durchlaufen der einzelnen Biegezonen aus. Die Riemenbreite zwischen den Stollen ist geringer als der Abstand der Gliedflanken zueinander, damit bei Relativbewegungen und Walkdeformation keine Flankenreibung entsteht.

Ein Stollenpaar, der dazwischenliegende Riementeil und ein Glied bilden je eine feste Einheit gegenüber den zwischen den Gliedern liegenden elastischeren Riemenzonen, die somit als Gelenke fungieren. Die Gelenkwirkung wird dadurch erhöht, daß die Riemeninnenseite zwischen den Gliedern Einkerbungen "K" erhalten, wodurch die Stollen "O" entstehen, die auf den Gliedfüßen sich abstützen. Die Flanken der Kerben, die über die Kettengliederfüße überstehen, werden in der Umlenkung gegeneinander gepreßt, wodurch die Radialspannung in der Wälzkette erhöht und eine Dämpfung erzielt wird.

Die radial gesehen äußere Riemenzone ist längsbewehrt und bildet die

...

Zugzone "S", während der in radialer Richtung gesehene innen liegende Teil des Riemenquerschnittes unbewehrt ist und zu Stollen "0" ausgebildet die Druckzone "T" bildet.

Die Zugzone übernimmt bei ziehender Kette die Zugkräfte, während die Druckkräfte bei drückender Kette von den Gliederköpfen aufgenommen werden.

In der engsten Umlenkung wird durch die Druckrolle "Z" auf die Wälzkette die Kraft P ausgeübt, die in der Wälzkette Biegekräfte hervorruft und im Punkt "U" die Druckkraft P 1 verursacht, die von den Kettenfüßen aufgenommen wird; während am äußeren Krümmungsradius "R" die Zugkraft P 2 auftritt, die von den Stollen "M" in die Zugzone "S" des Riemens übertragen wird.

Der Stollen "M", über die gesamte Riemenhöhe sich erstreckend, hat die Funktion, Kräfte im Wälzkettensystem zu übertragen und auszugleichen.

Folgende Prinzipzeichnungen sind beigefügt:

Blatt 1   Getriebestufe mit drückenden oder ziehenden Wälzketten

Blatt 2   Krümmungsradien der Wälzkette mit Abwälzgelenken

Blatt 3   Getriebestufe mit drückender und ziehender Funktion
          der Wälzketten

Blatt 4   Getriebevariante mit Wälzketten ohne Stützriemen

Blatt 5   Gestreckte Wälzkette mit Abwälzgelenken und funktionelle Darstellung der Glieder

Blatt 6   Detaildarstellung der Glieder und Abwälzgelenke

Blatt 7   Wälzkette mit herkömmlichen Drehgelenken

Blatt 8   Wälzkette mit Stollenriemen

Patentansprüche

1. Planetengetriebe mit wahlweise stationärem Planetenträger oder Hohlrad, wobei das Drehmoment vom Sonnenrad über endlose Zugmittel, wie Zahnriemen, Keilriemen oder Ketten auf Planetenräder und von dort auf das Hohlrad oder bei stationärem Hohlrad auf den Planetenträger übertragen wird, dadurch gekennzeichnet, daß anstelle der Planetenräder und des endlosen Zugmittels ein oder mehrere elastisch verformte Planeten treten, die dem ringzylinderförmigen Hohlraum zwischen Sonnen- und Hohlrad sich anpassend, in ovalem bis wurstförmigem Zustand, unmittelbar in das Sonnen- und Hohlrad eingreifend oder an diesen angreifend, ein- oder mehrspurig nebeneinander angeordnet, in Verbindung mit Rollen am Planetenträger das Drehmoment übertragen.

2. Planetengetriebe (Wälzkettengetriebe) nach Anspruch 1, dadurch gekennzeichnet, daß ein elastisch verformter Planet oder mehrere, als geschlossene elastisch verformte Wälzkette(n) ausgebildet, drückend mit Hilfe einer oder mehreren, zwischen den Wälzkettenenden bzw. zwischen je zwei Wälzketten angeordneten, mit dem Planetenträger fest oder verstellbar verbundenen Rollen, das Drehmoment übertragen, wobei die Rollen gleichzeitig den druckentlasteten Wälzkettenenden als Umlenkung und Stabilisierung dienen. Rollenpaare können, von Riemen umschlossen, miteinander verbunden sein.
Des weiteren dadurch gekennzeichnet, daß Sonnen- und Hohlrad sowie die Druck- und Umlenkrollen mit Laufspuren versehen sind, in welchen sich die Wälzketten mit entsprechenden Gegenflächen abstützen und zentrieren und den Zahneingriff entlasten.

3. Planetengetriebe nach Anspruch 1 und 2, dadurch gekennzeichnet, daß die verformbaren Planeten durch eine mit einem Deckel versehene Öffnung im Hohlradmantel in die Umlaufbahn eingeführt bzw. gewechselt werden können.

4. Planetengetriebe nach Anspruch 1, dadurch gekennzeichnet, daß elastisch verformte geschlossene Wälzketten oder radial stabilisierte Keil- oder Zahnriemen ziehend mit Hilfe von Zugrollen, die jeweils in einer oder beiden Umlenkungen des Zugmittels, von diesem umschlossen und mit dem Planetenträger fest oder verstellbar verbunden, angeordnet sind, das Drehmoment übertragen.

...

5. Planetengetriebe nach Anspruch 1, 2 und 4, dadurch gekennzeichnet, daß Zug- und Druckrollen als Paare kombiniert das Drehmoment übertragen, mit Hilfe von in der Umlaufbahn des Planetenträgers wirkenden, elastisch verformbaren Ausgleichselementen, die in den Zugrollen und/oder in den Druckrollen oder in den Wälzketten angeordnet sind und mittels derer in Verbindung mit dem Spiel oder Übermaß der Wälzkette innerhalb eines Wälzkettensektors, Zug- und Druckkräfte sich ausbalancieren.

6. Planetengetriebe nach Anspruch 1, 2, 4 und 5, dadurch gekennzeichnet, daß zwischen den Umlenkungen der elastisch verformten Planeten, von diesen umschlungen, eine oder mehrere Stabilisierungsrollen, ohne Verbindung mit dem Planetenträger, lose mitlaufen.

7. Geschlossene Laschenkette mit Drehgelenken bekannter Art, als Wälzkette nach den Ansprüchen 1, 2, 4, 5 und 6 ausgebildet, dadurch gekennzeichnet, daß diese Druck- und Zugkräfte aufnehmen bzw. übertragen kann. Des weiteren dadurch gekennzeichnet, daß die radiale Elastizität bei Verformung dadurch erreicht wird, daß zwischen je zwei radial in Richtung Wälzketteninnern verlängerten und sich verjüngenden Laschenpaaren ein elastisch verformbares Zwischenglied so vorgespannt angeordnet ist, daß der Wälzkette in jeder Biegung die notwendige Radialspannung verliehen wird.
Des weiteren dadurch gekennzeichnet, daß die Laschenfüße derart verjüngt und bemessen sind, daß diese im Bereich der Umlenkung, bei dortiger Belastung durch die Druckrollen sich berühren und die Kette versteift wird,
daß die Wälzkette außen, beiderseits, auf jeder Innen- und Außenlasche Lauf- und Stützrollen trägt, die in Längsrichtung der Laschen derart angeordnet sind, daß die der Außen- und Innenlaschen jeweils auf Lücke stehen und nicht miteinander verbunden, ein gemeinsames Profil bildend, auf Laufspuren der Zahnräder und Druckrollen die Wälzkette abstützen und zentrieren.

8. Geschlossene Gliederkette mit neuartigen Gliedern und Gelenken, als Wälzkette nach den Ansprüchen 1, 2, 4, 5, 6 und 7 ausgeführt, dadurch gekennzeichnet, daß diese Druck- und Zugkräfte übertragen kann und die Kettenglieder sich in Funktion aneinander abwälzen.

...

Des weiteren dadurch gekennzeichnet, daß zwischen je einem profilierten, starren Glied und einem vorgespannten, keilförmig radial nach innen sich verjüngenden und an der inneren Mantelseite offenen Hohlglied, ein teilweise elastisch verformbares Zwischenglied, mit diesen verspannt, angeordnet ist.

Weiterhin dadurch gekennzeichnet, daß das Zwischenglied, welches aus einem Z-förmigen steifen und aus einem mit diesem fest verbundenen elastischen Teil besteht, derart angeordnet ist, daß der steife Teil auf der einen Seite am Hohlglied formschlüssig anliegt und auf der anderen Seite, zu einer Wälzkante ("$B_1$") ausgebildet, mit dieser sich an dem starren Glied abwälzt.

Des weiteren dadurch gekennzeichnet, daß der elastische Teil des Zwischengliedes so ausgebildet und angeordnet ist, daß er zwischen Fuß und Kopf des starren Gliedes sitzend, in Verbindung mit der Z-Form des steifen Teiles und der Keilform des Hohlgliedes alle Kettenglieder in jeder Stellung radial formschlüssig und elastisch miteinander verriegelt.

Des weiteren dadurch gekennzeichnet, daß elastisch verformbare Wälzgelenke, im starren Glied eingelassen, die Wälzkante aufnehmen, zentrieren und die Wälzflächen entlasten.

Weiterhin dadurch gekennzeichnet, daß die vorgespannten Hohlglieder an der offenen Stelle des Mantels bis zum Anschlag sich zusammendrücken lassen und die Kette sich versteift.

Des weiteren dadurch gekennzeichnet, daß je zwei Hohlglieder mit zwei Zwischengliedern und einem starren Glied mittels durch die Hohlglieder gesteckten Spannelementen und beidseitigen Spannlaschen miteinander verspannt sind und die Hohlglieder bei Bewegung an den Spannelementen sich abwälzen.

Des weiteren dadurch gekennzeichnet, daß die Wälzlinien (Wälzkanten) ("$A_1$") und ("$B_1$") der Wälzkettenglieder auf ein und derselben Wirkkreislinie der Wälzkette liegen und diese in den Eingriffsektoren mit der Teilkreislinie der Zahnräder zusammenfällt.

Des weiteren dadurch gekennzeichnet, daß die Wälzgelenke aus elastisch verformbaren Voll- oder Hohlzylindern bestehen.

Des weiteren dadurch gekennzeichnet, daß Lauf- und Stützriemen die Kettenglieder miteinander verbinden, die Wälzkette an Sonnenrad, Hohlrad und Druckrollen abstützt, zentriert und den Zahneingriff entlastet.

...

9. Wälzgelenk nach Anspruch 8, dadurch gekennzeichnet, daß die Wälzgelenke aus elastisch verformbaren Hohlzylindern bestehen, die je in einer offenen, als Hohlzylindersegment ausgebildeten Gleitschale stecken und die Enden des Hohlzylindersegmentes dem zu zentrierenden Kettenglied als Anschlag dienen.

10. Geschlossene, elastisch verformbare Wälzkette nach Anspruch 1, 2, 4, 5, 6, 7 und 8, zur Übertragung von Zug- und Druckkräften, dadurch gekennzeichnet, daß trapezförmige, radial nach innen sich verjüngende Hohlglieder, mit Aussparungen im Kopf für den Zahneingriff versehen, auf einen vorgespannten geschlossenen Riemen, jedes einzelne Glied diesen umschließend, so aufgereiht sind, daß diese vom Riemen gegeneinander gehalten und zentriert werden und so das ganze Gebilde unter Radialspannung gehalten wird.

Des weiteren dadurch gekennzeichnet, daß die Gliederköpfe die Druckkräfte aufnehmen und in Funktion sich aneinander abwälzen, nur über die Riemenspannung miteinander verbunden.

Weiterhin dadurch gekennzeichnet, daß der Riemen durch beidseitige Stollen, die sich über die gesamte Höhe des Riemenquerschnittes erstrecken, mit den Gliedern so verbunden ist, daß je zwei einander gegenüberliegende Stollen, der dazwischenliegende Riementeil und das Glied eine steife Einheit bilden und daß in Verbindung mit dem elastischeren Riementeil zwischen den Gliedern und den dort an der Riemeninnenseite angeordneten Einkerbungen eine gute Gelenkigkeit zwischen den steifen Riemen-Glied-Einheiten und der Kraftwechsel zwischen Glied und Riemen gewährleistet ist.

Des weiteren dadurch gekennzeichnet, daß der Riemen in seiner Außenzone längsbewehrt, Zugkräfte und an seiner Innenseite, durch Einkerbungen zu Stollen ausgebildet, Druckkräfte in den Umlenkungen aufnimmt.

Weiterhin dadurch gekennzeichnet, daß in der engsten Umlenkung eine entgegen der Umlaufrichtung des Planetenträgers gerichtete, am Umlenkradius der Wälzkette angreifende Kraft, dadurch aufgenommen wird, daß einerseits die Kettenfüße sich berühren und die Druckkräfte aufnehmen und andererseits die am äußeren Umlenkradius entstehenden Zugkräfte über die seitlichen Stollen in die bewehrte Zugzone des Riemens geleitet werden.

Des weiteren dadurch gekennzeichnet, daß die in der Wälzkette entstehenden Wechselkräfte durch die seitlichen Stollen elastisch übertragen werden.

**Blatt 1**
*Getriebestufe m. drückenden od. ziehenden Wälzketten*

Schnitt C÷H

A

Planetenträger E'

Schnitt A÷B

oberer Gehäuseteil demontabel

C
E

B'

G'

Schnitt E÷F

S

6

E'

Zahn

Schnitt G÷H

D₂
Zahn

D₁

F

F

W V

S

G

T

H

H

T

B'

Kugellager

B

Kugellager

V

G

V

O

V

Schnitt S÷T

D₃

P

D

Schnitt O÷P

Exzenter

⅛

0062859

Blatt 2  Krümmungsradien d. Wälzkette

Abb 1: Trumm am Sonnenrad

Spannelemente für Glied-Vorspannung

Spannelemente als Gliedverbinder  ④

Lauf- und Stützriemen  ⑥

Abb. 2: Umlenkung, engster Radius

Einlagen   Gummi, hart   Gummi, weich

elastisches Zwischenglied bzw. Verbindungsglied

Wälzkante „A₁"   Wälzkante „B₁"   Wälzgelenk

vulkanisiert

① starres Glied

Stahlteil zum elastischen Zwischenglied

② vorgesponntes Glied

elast. Zwischenglied  ③

Abb. 3:
Trumm am Umfangsrad

# Blatt 3

Getriebestufe mit drückenden
u. ziehenden Wälzketten

Schnitt O÷P

"L" Rolle als Distanzhalter
läuft lose mit

Laufrichtung des
Planetenträgers

Schnitt A÷B

Planetenträger

Lager

Rolle mit Planetenträger
verbunden

Schnitt C÷D

Planetenträger

elastisches
Ausgleichselement

Zugrolle

Schnitt E÷F

Planetenträger

"L" Distanzhalter

Ansicht "A"

0062859

Wälzkette ohne Stützriemen

"X"

Riemen

R

J

K

"Y"

Gummi-Lauffläche

Punkt "X"

"P"

"Q"

Punkt "Y"

A

B

"R"

Riemen

"R"

Riemen

Schnitt A÷B

0062859

4/8

## Blatt 5

**Wälzkette, gestreckt dargestellt**

**Schnitt A÷B**

**Glieder-Verbindungslasche**

**Schnitt C÷D**

Hartgummi
Weichgummi

**Schnitt E÷F**

Zahn

Stützriemen
Gummi aufvulkan.

② vorgespanntes Glied
① Starres Glied
③ elastisches Zwischenglied

**Ansicht A''**
gegen Lasche

⑤ Glieder-Verbindungslasche

# Blatt 6    Einzelteile , Glieder u. Wälzgelenke

## Abb. 2, vorgesp. Glied ②

Punkt „A"

Gleitpfanne
Alternative

## Abb 1, starres Glied ①

⑨ Entlastungs=u. Zentrierlager

Abwälzkante B₁"

## Abb. 4, Entlastungs=und Zentrierlager, Schnitt A÷B genannt Wälzgelenk

entspannt

⑨

Alternative 1

Vorgespannt

Gleitschale

Fettkammer

entspannt

Alternat. 3    ⑨    Alternative 2

vorgespannt

⑨

## Abb 3  Zwischenglied ③

„B"

Stahl

vulkanisiert

Gummi od. elast. Kunststoff

Ansicht B"

# Blatt 7

## Wälzkette m. herkömmlichen Drehgelenken

### Abb.1
### Wälzketten-Umlenkung

U

### Abb.2  Wälzkette , gestreckt

A  18  15

C  D

E  F

Schnitt C÷D

17  B  16  15

### Schnitt A÷B
### Kettenrad in Ansicht nicht dargestellt

Kettenrad

18

18

Zahn

Schnitt E÷F

**Blatt 8** , Wälzkette m. Stollenriemen

Abb.1 Umlenkung d. Wälzkette

Abb.2 Wälzkette, gestreckt

Schnitt C÷D

Schnitt A÷B

Teilkreislinie

Zahn

Teilkreislinie

Punkt X" (geschnitten)

Z" Druckrolle

P

Stollenriemen

Y" Zahneingriff

Abb.3 Stollenriemen

Schnitt E÷F

Zugzone "S"

Druckzone "T"

Bewehrung

Schnitt G÷H

Zahneingriff

Krümmungs= radius "R"

8/8

0062859

Europäisches
Patentamt

**EUROPÄISCHER RECHERCHENBERICHT**

EP 82 10 2832.1

| | EINSCHLÄGIGE DOKUMENTE | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| Y | Soviet Inventions Illustrated April 72, A: General engineering Seite 4 & SU - A - 291 058 -- | 1-4 | F 16 H 7/02 F 16 H 1/34 F 16 H 9/26 |
| Y | Soviet Inventions Illustrated Week B 32, 21. September 1979 Section Q 64 & SU - A - 629 381 -- | 1-4 | |
| Y | FR - A - 1 144 606 (A. FISCHER) * Zusammenfassung, Seite 4, Zeilen 8 bis 29; Fig. 1 bis 15 * -- | 1-4 | **RECHERCHIERTE SACHGEBIETE (Int. Cl.³)** F 16 H 1/00 F 16 H 7/00 F 16 H 9/00 F 16 H 13/00 F 16 H 35/00 |
| A | US - A - 4 157 668 (N. FUKUMA et al.) -- | | |
| A | US - A - 1 853 770 (H. LACROIX) ---- | | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 24-06-1982 | LEMBLE |

EPA form 1503.1  06.78